# EUROPEAN PATENT APPLICATION

(11) **EP 1 965 347 A1**
(43) Date of publication of application: **03.09.2008**
(21) Application number: 08102055.4
(22) Date of filing: 27.02.2008
(51) Int. Cl.: G06Q 30/00, H04L 12/18, H04L 12/58

(54) **Server, advertisement distribution method, and program**

(30) Priority: 28.02.2007 JP 2007048347
(71) Applicant: NEC Corporation, Minato-ku Tokyo 108-8001 (JP)
(72) Inventor: Umezawa, Yohei c/o NEC Corporation, Tokyo 108-8001 (JP)
(74) Representative: Betten & Resch

(57) **Abstract**

According to the present invention, there is provided a server managing community service on network signed up by specific user. The server including a community management part managing at least one community and a category of the community generated in community service on network signed up by specific user, the community management part storing and managing content posted on the community, a user management part holding profile information of each user signed up with the community service, a mail creating part creating an e-mail distributed to the user registered in the user management part, an advertisement management part selecting an advertisement based on at least one of the category of the community, introduction introducing the community, and the user profile information, the advertisement management part inserting the selected advertisement into the e-mail created by the mail creating part, and a mail distribution part distributing the e-mail.

## Description

### INCORPORATION BY REFERENCE

This application is based upon and claims the benefit of priority from Japanese patent application No. 2007-048347, filed on February 28, 2007, the disclosure of which is incorporated herein in its entirety by reference.

### BACKGROUND OF THE INVENTION

### 1. Technical Field

The present invention relates to a method of providing advertisement provided in SNS (Social Networking Service), the advertisement being effective in a community.

### 2. Background Art

A banner advertisement on Web has conventionally been provided in an SNS, which is a community-type Web (WWW: World Wide Web) site promoting and supporting communication among people. For example, Japanese Unexamined Patent Application Publication No. 2006-185006 discloses the related technique of providing advertisement. However, there has not been provided an effective advertisement such as inserting the advertisement into new arrival notification mail of the SNS, or performing matching of the advertisement based on a diary in the SNS or information such as a category of the community or user profile.

More specifically, there has not been suggested a technique for selecting and distributing effective advertisement based on the specific information kept by the community service (category of community or user profile). Therefore, in a related art, it is difficult to promote community service providing business building effective advertisement revenue model and produces stable advertisement revenue. Further, the mechanism in which the user can get a reward when the user accesses relevant site of the distributed advertisement (clicks link) has not been provided, for example.

As stated above, in the related community service, the mechanism in which the service provider or the user can get a reward effectively by effective advertisement has not been realized. Therefore, it is difficult for the service provider to actively promote the community service providing business with the stable advertisement revenue. For the user as well, there is little motivation to actively use or contribute to the service such as opening of the community or posting of article / comment.

### SUMMARY

An exemplary object of the invention is to provide a mechanism for getting a reward effectively by providing the effective advertisement for the user signing up with the SNS.

According to one exemplary aspect of the present invention, there is provided a server managing community service on network signed up by specific user, the server including a community management part managing at least one community and a category of the community generated in community service on network signed up by specific user, the community management part storing and managing content posted on the community, a user management part holding profile information of each user signed up with the community service, a mail creating part creating an e-mail distributed to the user registered in the user management part, an advertisement management part selecting an advertisement based on at least one of the category of the community, introduction introducing the community, and the user profile information, the advertisement management part inserting the selected advertisement into the e-mail created by the mail creating part, and a mail distribution part distributing the e-mail.

According to another exemplary aspect of the present invention, there is also provided an advertisement distribution method of a server managing community service on network signed up by specific user, the advertisement distribution method including managing at least one community and a category of the community generated in community service on network signed up by specific user, storing and managing content posted on the community, holding profile information of each user signed up with the community service, creating an e-mail distributed to the registered user, selecting an advertisement based on at least one of the category of the community, introduction introducing the community, and the user profile information, inserting the selected advertisement into the created e-mail, and distributing the e-mail.

According to further exemplary aspect of the present invention, there is provided a program (program product) to distribute advertisement by a server managing community service on network signed up by specific user, the program making a computer execute the following process of managing at least one Room and a category of the Room generated in community service on network signed up by specific user, storing and managing content posted on the Room, holding profile information of each user signed up with the community service, creating an e-mail distributed to the registered user, selecting an advertisement based on at least one of the category of the Room, introduction introducing the community, and the user profile information, inserting the selected advertisement into the created e-mail, and distributing the e-mail.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 shows a configuration example of a community providing system according to the present invention;
Fig. 2 shows an example of a Room management table;
Fig. 3 shows an example of a user management table;
Fig. 4 shows an example of an advertisement management table;
Fig. 5 is a flow chart showing an example of an operation distributing a mail notifying new arrival information by a community providing server when new content is posted on a Room;
Fig. 6 shows an example of a new arrival notification mail; and
Fig. 7 is a flow chart showing an example of an operation of an SNS server when access to advertisement site is detected.

### EXEMPLARY EMBODIMENT

Exemplary embodiments of the present invention will now be described with reference to the drawings. The description and the drawings below are simplified or partially omitted as appropriate for the sake of clarity. In each drawing, the same reference symbols are given to the components having the same configurations or functions, and the description thereof is omitted.

### A First Exemplary Embodiment

In the first exemplary embodiment, the description will be made on one aspect of a server and an advertisement distribution method distributing an e-mail with effective advertisement in accordance with a newly posted event.

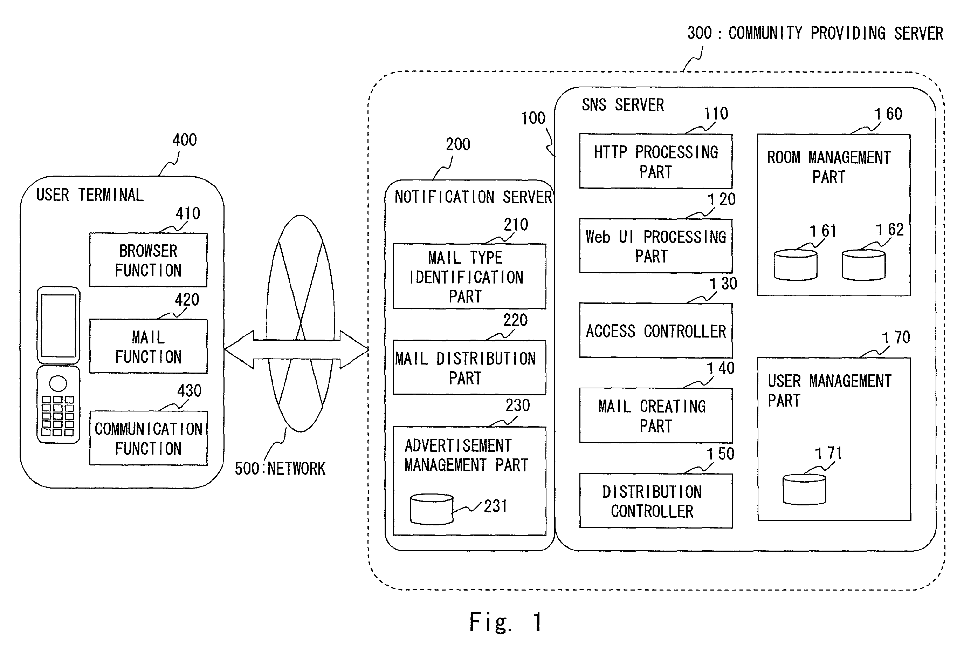

Fig. 1 shows a configuration example of a community providing system according to the present invention. The community providing system shown in Fig. 1 includes a community providing server 300 having an SNS server 100 and a notification server 200, a user terminal 400, and network 500.

The user terminal 400 is a cellular phone terminal, for example. The user terminal 400 includes a browser function 410, a mail function 420, and a communication function 430. The browser function 410 includes a function to browse Web pages. The mail function 420 is for transmitting or receiving the e-mail. The communication function 430 includes a function communicating with the community providing server 300 through network 500. The user terminal 400 includes input and output function used as an interface between the user and the terminal. For example, the user terminal 400 includes keys (buttons) for input, a display and so on. In the present exemplary embodiment, description of phone function included in the user terminal 400 is omitted.

In the community providing server 300 side, the SNS server 100 achieves community service (SNS service) and the notification server 200 notifies the user of information by e-mail or the like.

The SNS server 100 includes an HTTP processing part (Web server) 110, an Web UI processing part 120, an access controller 130, a mail creating part 140, a distribution controller 150, a Room management part (community management part) 160, and a user management part 170. The HTTP processing part (Web server) 110 controls HTTP (HyperText Transfer Protocol) access from the user terminal 400. The Web UI processing part 120 performs processing of Web interface. The access controller 130 controls access right from the user to SNS content. The mail creating part 140 performs transmission processing of the mail distributed to the user. The distribution controller 150 controls distribution of new arrival notification to the user. The Room management part (community management part) 160 manages and stores diary or content (article, comment, static image, dynamic image and so on) of the community (herein referred to as "Room") in the SNS. The user management part 170 manages information of each user signed up with the community service.

The Room management part 160 includes a Room management table (community management table) 161 and content holding part 162. The Room management part 160 manages at least one Room, but normally a plurality of Rooms.

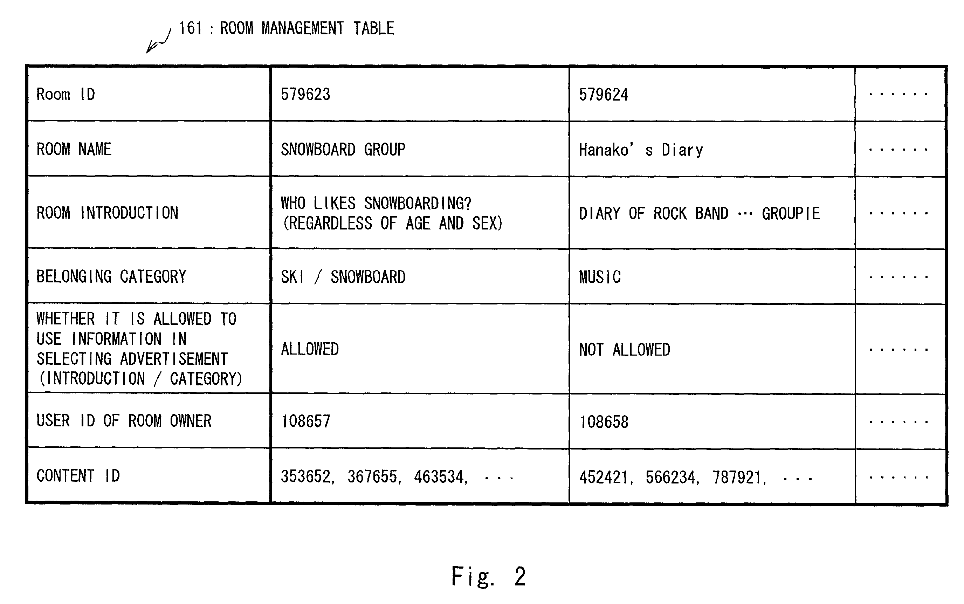

The Room management table 161 keeps the information managing the Room. For example, the Room management table 161 holds information indicating characteristics of Room such as a category or introduction of Room, or information regarding whether it is allowed to use the category / introduction in selecting advertisement (whether it is allowed to use the information in selecting advertisement). Fig. 2 shows one example of the Room management table.

The content holding part 162 holds content posted on each Room. Although the content holding part 162 is considered here to hold the content of at least one of the article, comment, static image, or dynamic image, other information can be held in the content holding part 162. The content held in the content holding part 162 corresponds to the Room management table 161 by the content ID.

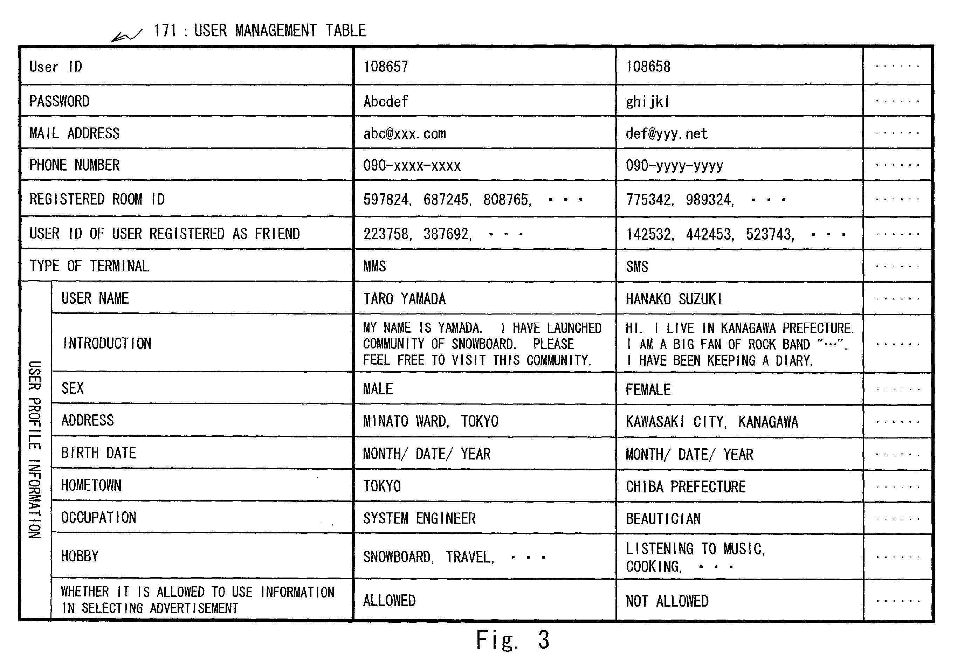

The user management part 170 includes a user management table 171 holding information identifying (managing) the user. The user management table 171 stores account information (User ID, password, mail address, phone number and the like) identifying the user, user profile information (user name, introduction, sex and the like), a registration Room ID (registration community information) identifying the Room signed up by the user, and information regarding whether it is allowed by the user to use the user profile information in selecting the advertisement (whether it is allowed by the user to use the information in selecting the advertisement), for example. Fig. 3 shows one example of the user management table.

The notification server 200 includes a mail type identification part 210, a mail distribution part 220, and an advertisement management part 230. The mail type identification part 210 automatically selects the type of the new arrival notification mail in accordance with the function included in the user terminal 400. The mail distribution part 220 transmits the mail. The advertisement management part 230 manages advertisement inserted into the mail, performs matching processing (processing for automatically selecting most appropriate advertisement), and inserts the advertisement into the mail.

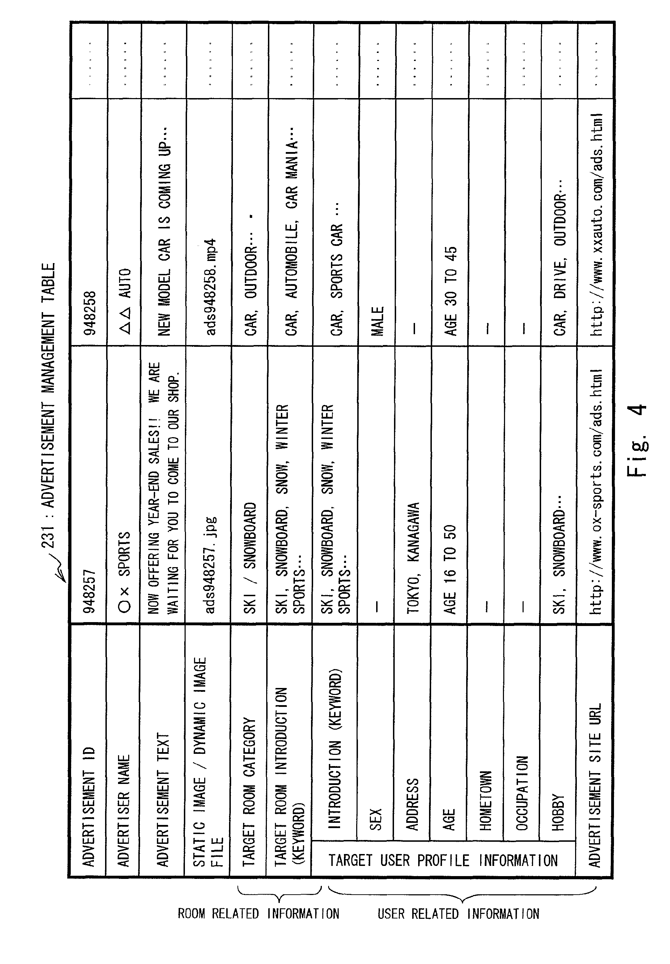

The advertisement management part 230 includes an advertisement management table 231. Fig. 4 shows one example of the advertisement management table. The advertisement management table 231 includes information regarding advertisement and advertiser, Room related information such as a target Room category or a target Room introduction, and a user related information such as target user profile information.

The user terminal 400 and the community providing server 300 are connected through the network 500. The network 500 is herein considered as the Internet. The network 500 may be other network than the Internet so long as it can provide the same function as the Internet.

Now, the process flow of the community providing system is described. The outline of the process is as follows. (1) The user signs up with the community service, (2) the user opens the Room and other user registers in the Room, (3) the community providing server 300 transmits the mail with advertisement to the users when new content (article) is posted on the Room, and (4) the community providing server 300 transmits the mail with advertisement to the user when the comment is posted regarding the new content (article). In the following description, the operation carried out by the user means the operation performed on the Web pages using the browser function 410 of the user terminal 400 unless otherwise noted.

Each function included in the user terminal 400 performs processing achieved by each function based on the information input by the user. The detailed description of the operation of the HTTP processing part 110, the Web UI processing part 120, the access controller 130, and the distribution controller 150 included in the SNS server 100 when the access to the SNS server 100 (community providing server 300) is carried out by the user is omitted.

First, the description will be made on the process of (1) signing up with the community service. The user accesses the SNS server 100 using the browser function 410 of the user terminal 400. The user terminal 400 accesses the SNS server 100 using the communication function 430 to notify the user information that will be registered based on the information input by the user. The user performs user registration of the community service and creates an account. Then the user logs into the service by the created account. The user registers his / her own profile (introduction, sex, hometown, occupation, hobby and so on). The profile can be available to other users. Then the user selects whether or not the registered user profile information should be used in matching process when the advertisement is inserted into the mail described below.

As stated above, the information registered in the SNS server 100 through the browser function 410 is transmitted to the user management part 170. The user management part 170 registers the notified information in the user management table 171.

Next, the description will be made on the process of (2) opening the Room by the user who has obtained account. The user creates his / her own Room (corresponding to the diary or community). The user is the owner of the Room. Then the user inputs the Room introduction and sets the category (selected by predetermined categories) regarding the Room that is newly created. At this stage, the Room introduction and the category are available to other users. Then the user selects whether or not the registered Room introduction or category should be used in matching process when the advertisement is inserted into the mail described below.

As stated above, the information regarding the Room opened through the browser function 410 by the user is transmitted to the Room management part 160. The Room management part 160 gives the Room ID for each Room and registers the management information of the newly opened Room in the Room management table 161.

Other user (s) than the user who opened the Room is the member of the newly opened Room. The user can be a member when the owner of the Room invites the user and the user accepts the invitation, or when the user registers on his / her own. The registration Room ID (registration community information) of each user is transmitted to the user management part 170. The user management part 170 then registers the information in the user management table 171.

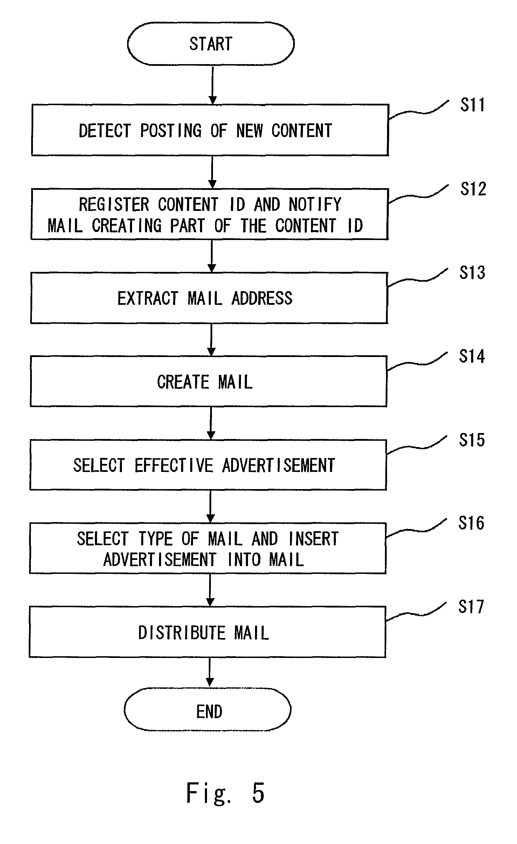

Next, the description will be made on the process where (3) the community providing server 300 transmits the mail with advertisement to the user when the new content is posted on the Room. The owner or the member of the Room posts article on the Room. The article includes a title and a text. The community providing server 300 distributes new arrival notification mail to the user terminal 400 of the owner / member of the Room (excepting the poster) to notify that the new content (article) is posted. Fig. 5 is a flow chart showing an example of the operation distributing a mail notifying new arrival information by the community providing server when the new content is posted on the Room. The operation of distributing the new arrival notification mail is described hereinafter in detail with reference to Fig. 5.

The Room management part 160 receives notification that the new content is posted on the Room from the HTTP processing part 110 (S11). The Room management part 160 gives the content ID for the posted new content, registers the content ID in the Room management table 161, stores the new content in the content holding part 162, and notifies the mail creating part 140 that the new content is registered with the Room ID and article of the new content (S12).

The mail creating part 140 searches the registration Room ID of the user management table 171, detects the user registering the notified Room ID (excepting the poster), and obtains the mail address (S13). Then the new arrival notification mail is created notifying the new content that is transmitted (S14). The new arrival notification mail includes the title of the article, (a part of) the text of the article, and URL (Uniform Resource Locator) of Web pages of the article. The mail creating part 140 transmits the new arrival notification mail that is created to the advertisement management part 230.

The advertisement management part 230 first selects the effective advertisement (S15). The advertisement management part 230 performs matching processing according to the introduction or category of the Room including the content (article) or information set or included in the user profile information of the user receiving the new arrival notification mail based on the Room management table 161, the user management table 171, and the advertisement management table 231 to automatically select the effective advertisement.

More specifically, the advertisement management part 230 performs matching between the Room related information of the advertisement management table 231 and the corresponding information of the Room management table 161 (category / introduction and so on), or between the user related information of the advertisement management table 231 and the corresponding information of the user management table 171 (user profile information and so on) to select the matched advertisement. The advertisement management part 230 selects the advertisement by a method selecting advertisement that matches both of the Room related information and the user related information or a method selecting advertisement that matches either one of the information. Therefore, the advertisement management part 230 selects the advertisement that matches based on at least one of the category of the community, the introduction introducing the community, and the user profile information.

However, when it is not allowed by the user that the user profile information or the Room introduction / category is used for matching process when these information is registered, these information is not used. The advertisement management part 230 determines if the information (introduction / category) can be used for selecting advertisement based on the information stored in the Room management table 161 or the user management table 171.

Next, the mail type identification part 210 automatically selects the type of the mail in accordance with the user terminal receiving the mail. For example, the mail type identification part 210 selects MMS (Multimedia Messaging Service) or the like for the user terminal 400 where the mail corresponding to the multimedia such as static image or dynamic image can be used so that the static image or dynamic image is used for the advertisement. On the other hand, the mail type identification part 210 selects SMS (Short Message Service) or the like for the user terminal 400 where only the text can be used so that the advertisement with text is used. The mail type identification part 210 identifies the type of the mail based on the attribute of the terminal of the user management table. Next, the advertisement management part 230 selects the displayed content (whether the advertisement includes the static image or dynamic image or only the text) corresponding to the type of the mail identified by the mail type identification part 210 for the selected advertisement and the advertisement is inserted into the new arrival notification mail (S16).

The mail distribution part 220 distributes the new arrival notification mail with advertisement (S17).

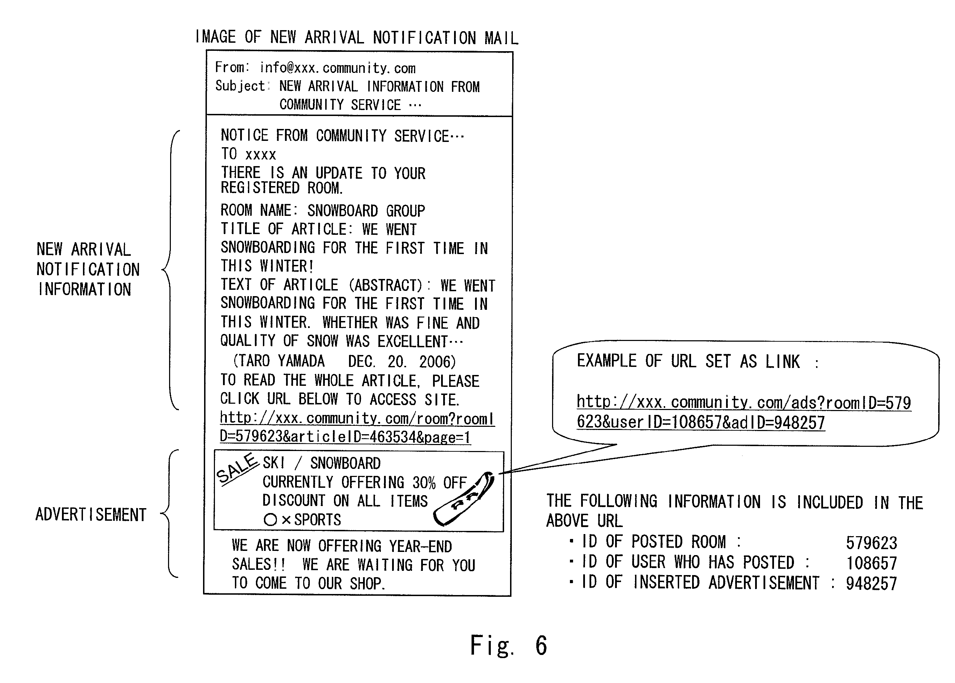

Fig. 6 shows an example of the new arrival notification mail. The upper part indicates new arrival notification information showing the content (article) that is newly posted. The lower part indicates the advertisement whose style is selected in accordance with the function of the user terminal 400 by the advertisement management part 230. Fig. 6 shows an example of the advertisement when the MMS is selected. The advertisement includes the text and may include static image / dynamic image in accordance with the function of the user terminal 400. Further, the address information (URL) displaying the site (site of the advertiser) that is related to the advertisement is added to the advertisement (link is set). The information (description) shown in right side of Fig. 6 will be described in a second exemplary embodiment.

The new arrival notification mail that is transmitted by the above procedure is distributed to each user terminal 400. When the user clicks the URL of the article, the browser function 410 of the user terminal 400 is started up to access the above URL, and the Web page having the posted article is displayed. Then the owner or the member of the Room posts the comment regarding the article in the Room. It is possible to post a plurality of comments for one article.

Next, description will be made on the process that (4) the community providing server 300 transmits the mail with the advertisement to the user when the comment is posted regarding the new content (article). The community providing server 300 distributes the new arrival notification mail to each user terminal 400 of the owner / member of the Room (excepting the poster) in accordance with the process described with reference to Fig. 5 when the new comment is posted. This mail includes a title of the article (article that is initially posted), (a part of) the text of the article, (a part of) the comment text that is newly posted, and the URL of the Web page having the article / comment. As a specific image, the mail obtained by adding the information of the comment to the drawing in Fig. 6 is created.

As a following process, when further comment is posted regarding the article or comment that is newly posted, the community providing server 300 repeatedly distributes the new arrival notification mail in accordance with the procedure shown in Fig. 5.

As stated above, the community providing server 300 transmits the new arrival notification mail having the effective advertisement when the new content is posted on the Room. Therefore, the effect of the advertisement is improved by inserting the advertisement that attracts the user registered in the Room.

Next, the advertisement inserted into the new arrival notification mail notifying that the comment regarding the article or comment is posted will be described. The advertisement management part 230 performs matching in a same way as in the previous new arrival notification mail and selects the inserted advertisement (S15 in Fig. 5). Therefore, the advertisement management part 230 may select the same advertisement or different advertisement as the previous new arrival notification mail according to the target that matches. For example, the matching is performed based on the content of the comment in addition to the user profile information. Therefore, different advertisement may be selected depending on the content of the comment even in the comment regarding the same article. Alternatively, the advertisement management part 230 may change the inserted advertisement every time in consideration of the effect of the inserted advertisement such as a hit count. Further alternatively, it is also possible to change the text or image drawings of the inserted advertisement when the advertisement of the same advertiser is selected.

The advertisement management part 230 may select the inserted advertisement by following procedures in addition to the case of notifying that the above-described comment is posted. When the matching process is performed, the advertisement management part 230 may perform matching using a part of the Room related information or the user related information. Further, the advertisement management part 230 may decide priority of the selected advertisement by adding weight to each of the Room related information and the user related information.

Further, the advertisement management part 230 may select the advertisement by taking elements into consideration such as the advertiser having highest hit count by the users or the advertiser whose advertising rate is high.

As stated, according to the present exemplary embodiment, it is possible to select the advertisement that attracts the user registered in the Room and to distribute the effective advertisement to the user in the community service based on the specific information held by the community providing server 300 (such as the category of the community or the user profile). It can be expected that the hit count to the advertisement by the users may be increased by distributing the effective advertisement. Therefore, it is possible to build the effective advertisement revenue model and to promote the community service providing business with stable advertisement revenue. Hence, the community service can be activated.

In the above description, the case in which the article or the comment is newly posted is described. However, the process of the present exemplary embodiment may be applied to other aspects as long as the information is managed by the Room management part 160 as the content of the Room. For example, the content may include the static image or the dynamic image. Further, in the present exemplary embodiment, the description is made on the case in which the mail is distributed when the new arrival content is posted. However, it is also possible to select and distribute the effective advertisement using the advertisement distribution method described in the present exemplary embodiment when the mail is transmitted regarding the Room periodically or in a predetermined timing (once a week, for example). The transmitted mail is not limited to the mail having content. The advertisement management part 230 may insert the advertisement into the mail used for communication with the user registered in the Room (the mail without the content). In this case, the content is excepted from the target of the matching process. In the same way, it is possible to insert the advertisement into the mail used for communication with the user signed up with the community service. In this case, it is possible to select the advertisement based on the user profile information of the user management table 171 and the registration Room ID if desired.

### A Second Exemplary Embodiment

In the second exemplary embodiment, one aspect of the server and the advertisement distribution method providing the mechanism promoting the use of the advertisement inserted into the new arrival notification mail will be described. The mechanism of the community providing system and the transmission of the new arrival notification mail are the same as in the first exemplary embodiment. Hereinafter, the process for providing the mechanism in which the user can obtain the reward (benefit) when the user accesses the relevant site (clicks link) of the distributed advertisement will be described.

First, the description will be made on the process performed by the user side using the user terminal 400. The new arrival notification mail is distributed to the user terminal 400 of each user. The title of the article, (a part of) the text of the article, the URL of the Web page having this article, and the inserted advertisement are included in the text of this mail. The user clicks the URL of the article in the mail text. The browser function 410 of the user terminal 400 is activated to access the URL of the article, and the Web page having the content of the posted article and so on is displayed.

The user browses the advertisement in the new arrival notification mail and clicks the banner of the advertisement or the URL (advertisement URL, advertisement address information) set in the text of the advertisement. The browser function 410 of the user terminal 400 is activated to access the advertisement URL. The advertisement URL includes a link to the specific program in the community providing server 300. The advertisement URL also includes (1) the Room on which the content such as the article / comment is posted, (2) the user who has posted, and (3) the ID to identify the inserted advertisement. The right side of Fig. 6 shows an example of the advertisement URL. In the example of Fig. 6, the advertisement URL (address information) includes the link to the specific program in the community providing server 300. The advertisement URL also includes next information (1) to (3) as the parameter as a specific example of above (1) to (3). (1) The ID of the posted Room: 579623, (2) the ID of the user who has posted: 108657, and (3) the ID of the inserted advertisement: 948257.

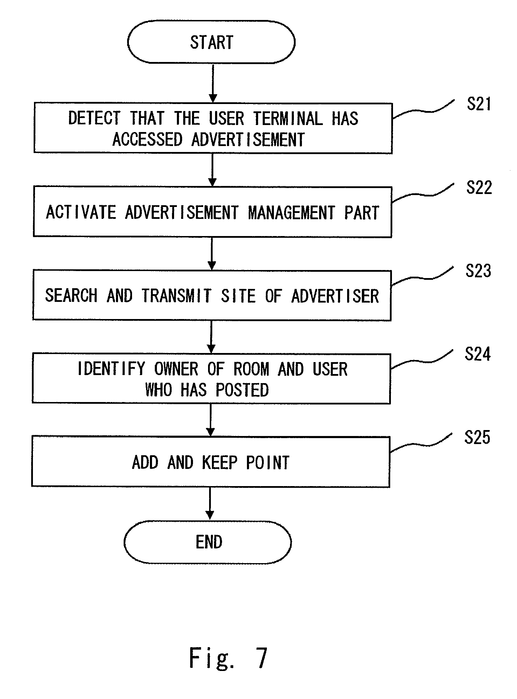

The SNS server 100 to which the browser function 410 accesses performs the following process. Fig. 7 is a flow chart showing one example of operation of the SNS server when the access to the advertisement site is detected.

The HTTP processing part 110 of the SNS server 100 receives notification that the user terminal 400 has accessed the advertisement address information (advertisement URL) as shown in Fig. 6 (S21). The HTTP processing part 110 is set to activate the specific program in the SNS server 100 (S22). In the present exemplary embodiment, the advertisement management part 230 includes a function to manage the advertisement where the specific program is realized. The HTTP processing part 110 activates the advertisement management part 230. The advertisement management part 2:30 receives the notification of the advertisement URL according to the fact that the browser function 410 has accessed the advertisement URL. The advertisement management part 230 searches the URL of the site (site of the advertiser or the like) that is previously related to the advertisement from the advertisement management table 231 based on the third parameter (the ID of the inserted advertisement) , and transmits the request (display request) from the user terminal 400 to the URL (S23).

As a result, the site related to the advertisement (site of the advertiser or the like) is displayed in the browser of the user terminal 400. The advertisement management part 230 identifies the Room owner from the first parameter (the ID of the posted Room) and the user who has posted from the second parameter (the ID of the user who has posted) (S24) and performs the adding process of the point for each parameter. For example, the user management table 171 keeps the point that is added in a past (not shown in Fig. 3) and the advertisement management part 230 adds the point that is newly added to the user management table to store the total point (S25).

The user management part 170 (or the advertisement management part 230) periodically (every month, for example) calculates the total point stored for each user. Then the community service provider providing the community providing system provides predetermined percentage of the advertisement revenue obtained from the advertiser for each user according to the point kept by the user.

As stated above, each user accesses the advertisement inserted into the mail distributed to the user terminal 400, and then the point is provided to the owner of the Room or the user who posted the content on the Room so that the owner or the user can get a reward. Therefore, it is possible to provide motivation for active use of and contribution to the community service such as the opening of the community or the posting of the content like article / comment. Hence, the hit count to the community service and the number of users can be increased and the whole service is activated.

In the above description, the case where the point is given to the owner of the Room or the user who posted the new article / comment is described. However, the target is not limited to them but can be the user who signs up with the community service based on the predetermined criteria. This can be achieved by including the ID of the user who gets point in the advertisement URL. If at least one ID of the user is included in the advertisement URL, the advertisement management part 230 can add the point.

### Other Exemplary Embodiment

The advertisement distribution method of the server described in the first exemplary embodiment and the second exemplary embodiment can be executed by the program (or a program product including a computer useable medium having a computer program logic stored). The program is loaded on the memory on the computer and is executed under a control of CPU (Central Processing Unit). The program realizes the next procedures by the computer. (1) A procedure for managing at least one Room generated in the community service and the category of the Room, (2) a procedure for storing and managing the content posted on the Room, (3) a procedure for holding profile information of each user signed up with the community service, (4) a procedure for creating the e-mail for the registered user, (5) a procedure for selecting the advertisement based on at least one of the introduction introducing the community and the user profile information, (6) a procedure for inserting the selected advertisement into the created e-mail, and (7) a procedure for distributing the e-mail.

As stated above, according to exemplary embodiments described above, the user can receive the effective advertisement that matches the content of the Room and preference of the user in receiving the new arrival notification. Therefore, hit count of the advertisement is increased and the advertisement revenue provided for the service provider and the reward provided for the end user are increased, thereby activating the community service.

Further, according to the exemplary embodiments described above, the type of the mail is automatically selected in accordance with the user terminal receiving the e-mail. Therefore, the advertisement with static image or dynamic image can be distributed to the terminal that can use the mail (MMS or the like) in accordance with the multimedia such as the static image or dynamic image, thereby improving the advertising effect. On the other hand, the advertisement with only the text is distributed to the user terminal that corresponds to the mail (SMS or the like) which can only use the text. Therefore, it is possible to cover all the user terminal as a receiving terminal, to distribute the new arrival notification mail having the effective advertisement to the registered user terminal, and to increase the hit count the user accesses the advertisement.

Further, since a part of the advertisement revenue provided by the advertiser is distributed not only to the service provider of the community service but also to the user who posted the article or the owner of the Room on which the article is posted, the service can be more attractive, and this can promote the service use and lead to increase in the number of users using the service, so as to activate the community service.

An exemplary advantage according to the invention is that it is possible to achieve a mechanism for getting a reward effectively by providing an effective advertisement for a user signed up with the SNS. Therefore, it is possible to activate community service.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

## Claims

1. A server comprising:
a community management means for managing at least one community and a category of the community generated in community service on network signed up by specific user, the community management means for storing and managing content posted on the community;
a user management means for holding profile information of each user signed up with the community service;
a mail creating means for creating an e-mail distributed to the user registered in the user management means;
an advertisement management means for selecting an advertisement based on at least one of the category of the community, introduction introducing the community, and the user profile information, the advertisement management means for inserting the selected advertisement into the e-mail created by the mail creating means; and
a mail distribution means for distributing the e-mail.

2. The server according to claim 1, wherein the user management means further manages registration community information identifying the registered community from among a plurality of communities,
the mail creating means creates the e-mail for each community and creates the e-mail distributed to the user registered in the community for each user based on the registration community information, and
the advertisement management means selects the advertisement inserted into each e-mail based on at least one of the category of the community where the mail creating means creates the e-mail, introduction introducing the community, and profile information for each user registering the community.

3. The server according to claims 1 or 2, wherein the mail creating means inserts the content posted on the community into the e-mail, and
the advertisement management means further selects the advertisement that matches the inserted content.

4. The server according to claim 3, wherein the community management means detects occurrence of an event that new content is posted on each community, and
the mail creating means creates the e-mail of the community when the community management means detects the occurrence of the event.

5. The server according to any one of claims 1 to 4, wherein the mail creating means creates the e-mail of the community at a predetermined timing.

6. The server according to any one of claims 1 to 5, wherein the advertisement management means inserts at least one of text, static image, and dynamic image as the advertisement, and the advertisement management means further inserts an address indicating a site related to the advertisement into the e-mail.

7. The server according to any one of claims 1 to 6, wherein the advertisement management means adds address information including advertisement identifier identifying the advertisement and owner identifier identifying an owner of each community to the advertisement inserted into the e-mail, and when the address information is accessed, the advertisement management means notifies site previously related to the advertisement of display request based on the access to provide indication to display the site on the terminal, and adds the point to the owner based on the owner identifier to provide reward in accordance with the point for the owner.

8. The server according to claim 4, wherein the advertisement management means adds address information including advertisement identifier identifying the advertisement, owner identifier identifying an owner of each community, and user identifier identifying the user who posted the new content on each community to the advertisement inserted into the e-mail, and when the address information is accessed, the advertisement management means notifies site previously related to the advertisement of display request based on the access to provide indication to display the site on the terminal, and adds the point to the owner and the user who posted the content based on the owner identifier and the user identifier to provide reward in accordance with the point for the owner and the user.

9. The server according to any one of claims 1 to 6, wherein the advertisement management means adds address information including advertisement identifier identifying the advertisement and user identifier identifying the user signed up with the community service to the advertisement inserted into the e-mail, and when the address information is accessed, the advertisement management means notifies site previously related to the advertisement of display request based on the access to provide indication to display the site on the terminal, and adds the point to the user based on the user identifier to provide reward in accordance with the point for the user.

10. An advertisement distribution method comprising:
managing at least one community and a category of the community generated in community service on network signed up by specific user;
storing and managing content posted on the community;
holding profile information of each user signed up with the community service;
creating an e-mail distributed to the registered user;
selecting an advertisement based on at least one of the category of the community, introduction introducing the community, and the user profile information;
inserting the selected advertisement into the created e-mail; and
distributing the e-mail.

11. A program to cause a computer to execute the steps of:
managing at least one Room and a category of the Room generated in community service on network signed up by specific user;
storing and managing content posted on the Room;
holding profile information of each user signed up with the community service;
creating an e-mail distributed to the registered user;
selecting an advertisement based on at least one of the category of the Room, introduction introducing the community, and the user profile information;
inserting the selected advertisement into the created e-mail; and
distributing the e-mail.
